# EUROPEAN PATENT SPECIFICATION

(11) **EP 3 708 349 B1**
(45) Date of publication and mention of the grant of the patent: **16.12.2020**
(21) Application number: 19162561.5
(22) Date of filing: 13.03.2019
(51) Int. Cl.: B29D 30/00

(54) **WINDING GROUP FOR A MULTILAYER SEMIFINISHED PRODUCT AND REEL-HOLDER CARRIAGE**
WICKELGRUPPE FÜR EIN MEHRLAGIGES HALBZEUG UND WAGEN FÜR SPULENHALTER
GROUP D'ENROULEMENT POUR UN PRODUIT SEMI-FINI MULTICOUCHE ET CHARIOT POUR PORTE-BOBINE

(43) Date of publication of application: 16.09.2020
(73) Proprietor: Rodolfo Comerio Srl, 21058 Solbiate Olona (VA) (IT)
(72) Inventor: COMERIO, Carlo, 21058 Solbiate Olona (VA) (IT)
(74) Representative: M. Zardi & Co S.A.

(56) References cited:
- EP-A1- 1 236 669
- EP-A1- 2 143 553
- WO-A1-95/34497
- WO-A1-2014/011033
- DE-U1-202013 103 530

## Description

### Field of application

The invention relates to the field of manufacturing multilayer semifinished products comprising a textile or metal substrate, for example the so-called rubber cord.

### Prior art

Semifinished products comprising a textile or metal substrate and an elastomer coating on one face or both faces are known and are widely used for making tyre carcasses and for other applications such as conveyor belts, drive belts, etc. A multilayer semifinished product of this type is commonly termed a "cord". It is substantially a sheet of indefinite length with a predetermined width, typically between 1 metre and 2 metres. The thickness is variable according to the product, being typically a few millimetres, e.g. 5 mm.

The manufacturing process includes winding the semifinished product to form a coil. To prevent the sticking of the rubber, it is known to wind the semifinished product together with a non-stick service fabric (or a film). Said service fabric separates the windings of semifinished product, preventing direct contact between the rubber layers that could stick together damaging the reel of semifinished product or even making it unusable.

A machine for producing a semifinished product requires a winding group comprising a first reel for the coil of semifinished product and, normally, also comprising a second reel for the coil of service fabric. Said winding group is positioned immediately downstream of a cutting group of the semifinished product An example for such a machine is disclosed in DE 20 2013 103 530 U1. The coil of semifinished product is removed when it reaches a predetermined maximum dimension, and then sent to storage or to subsequent process steps. A subsequent process step may include, for example, cutting the semifinished product into sheets for tyres. Clearly a new reel must provided onto which the semifinished product can be wound with the service fabric.

The operations of removing the complete coil and providing the new reel, preferably already drawn in with the service fabric, are performed manually by stopping the winding. To avoid stopping the process upstream, the line normally comprises an accumulator of semifinished product, which is however a large and very expensive item in relation to its capacity. Therefore, the coil change should be completed quickly.

The prior art does not offer a satisfactory solution to this requirement. The coil change is currently an essentially manual operation performed with the aid of a hoist for lifting and moving the complete coil and positioning the new reel. The operation in this way is laborious and not free from risks because notable loads have to be moved. The execution time is variable and in order to have a certain safety margin the accumulator must be sized with a large capacity, which means a high cost.

There is also the problem of a convenient recover of the service fabric. For a given maximum diameter of the coil (when reached, the coil must be removed), the number of winding revolutions and therefore the required amount (length in metres) of the service fabric depend on the thickness of the semifinished product itself.

Therefore, if the semifinished product is rather thick, it is possible that the winding is completed and the coil of the service fabric (still drawn in with the coil of the semifinished product) has been used only partially. This residual coil is not sufficient to start a new winding cycle and cutting the service fabric would be a waste of material. For a complete recovery, the service fabric must be completely wound onto the finished coil which consumes time and manpower. Furthermore in the machines for cutting the semifinished product into sheets for tyres the fabric must be re-wound from the respective coil before reaching the semifinished product again. All the above operations increase the cost.

Finally, this service fabric must be brought to the winder again and manually drawn in to the empty reel, ready for the formation of a new coil.

Another technical problem is represented by the need to maintain the correct alignment (centring) between the coil of service fabric and the coil where the semifinished product is collected. In the event of misalignment of the service fabric, a contact between the sticky surfaces of the semifinished product and consequent product damage may occur.

### Summary of the invention

The invention aims to solve the technical problems presented above and the resulting costs. The invention in particular aims to provide a winding group adapted to facilitate and speed up the coil change operation. A further object of the invention is to allow a quick and substantially simultaneous change of the product coil and the service fabric coil, also preventing wasted time for the recovery of the latter.

The aim is achieved with a winding group according to claim 1. The preferred features are recited in the dependent claims.

The winding group according to claim 1 comprises:
a winding station;
a carriage positionable in the winding station, in a receiving position for receiving the semifinished product, the carriage also being insertable/extractable laterally in/from said winding station;
a driving unit that is slidable through said winding station in a lateral insertion and/or extraction direction of the carriage, the carriage being associable with the driving unit;
wherein the carriage comprises at least a first reel with a horizontal axis for winding the semifinished product;
the driving unit comprises at least a first motor with at least one power drive engageable with said first reel of the carriage.

Said first motor of the driving unit has two power drives located on opposite sides of the driving unit itself; the first reel of the carriage comprises two joints which are located at the two ends of the reel and, therefore, on opposite sides of the carriage, and can be equally engaged with one or the other power drive of the motor. Therefore, the driving unit can drive the winding reel of the carriage regardless of placing the carriage on one side or on the other side of the driving unit itself.

The carriage comprises a second reel for the service fabric, also with two joints on the opposite sides of the carriage, and the driving unit comprises a second motor dedicated to operate said second reel. More preferably, also said second motor has two power drives on opposite sides of the driving unit, so that also the second reel can be operated regardless of placing the carriage on one side or the other of the driving unit.

In a preferred embodiment at least one motor of the driving unit comprises a gear reducer with two power drives that are positioned on opposite sides of the unit, thus forming a dual output gear motor group; the driving unit comprises a displacement system of said gear motor group, which is preferably a pneumatic system, for positioning the gear motor group to cause an engagement with a reel or with the reels of the carriage positioned to the side of the driving unit. Preferably, the driving unit comprises two gear motors, respectively for the reel of the semifinished product and for the reel of the service fabric, both gear motors with a dual output and pneumatically movable, independently from each other, to allow engagement with the respective reels.

The joints between the power drives and the reels can be advantageously pneumatic and of the conical type or shape joints, preferably with male/female parts of a truncated pyramid shape.

More preferably the joints comprise a male element with a truncated pyramid shape and the power drives comprise a respective truncated pyramid shaped female element. In an even more preferred embodiment, the male element has a truncated pyramid shape with a square base and the female element comprises two seats adapted to house the male joint element, the two seats being rotated by 45 degrees to facilitate the coupling irrespective of the mutual angular position between the male element and the female element.

Preferably, the carriage is equipped with wheels to be insertable and extractable into/from the working position. The wheels of the carriage are advantageously pivoting wheels.

Preferably, the driving unit is slidable on guides. Said guides are preferably rectilinear and perpendicular to a longitudinal line direction, along which the process develops. Said guides are preferably positioned below floor level. The driving unit is for example provided with sliders associated with said guides. In a particularly preferred embodiment, the sliding of the driving unit through the station is motor driven.

The driving unit advantageously comprises first coupling means adapted to cooperate with corresponding second coupling means of the carriage, to firmly anchor the driving unit to the carriage. Said first coupling means are advantageously provided on both sides of the unit, allowing the fixation of a carriage on both sides of the driving unit, as well as the simultaneous fixing of two carriages on opposite sides of the unit.

The joint between the power drive and the reel allows the transmission of torque and the operation of the reel; the coupling means allow securing the driving unit to the carriage and further allow the driving unit to push or pull the carriage through the winding station.

The winding group is generally positioned downstream, for example below, a cutting group of the semifinished product.

It is to be noted that the process for the production of a semifinished product of the type considered here, particularly in a calender, develops mainly in a longitudinal direction (wherein the length of the line can reach some tens of metres), therefore a main longitudinal machine direction also termed line direction can be identified, which coincides with the transport direction of the sheet of material.

The reel-holder carriages can be extracted and inserted laterally, either from the right or the left, in a direction perpendicular to said line direction. The driving unit can also be moved in a perpendicular direction to the line, so as to move the carriage in use from/into the winding station. For example, the aforesaid guides of the driving unit are arranged in a lateral direction perpendicular to the line direction.

The carriage in use, which is placed in the winding station, can be termed "onboard" in the machine.

A further aspect of the invention relates to an alignment and centring system of the reel of service fabric.

In a preferred embodiment the second reel of the carriage is mounted on an auxiliary frame, which is slidable with respect to the main frame of the carriage itself, which carries the reel of the semifinished product. The alignment system comprises a coupling means that can be coupled to said auxiliary frame for centring between the second reel and the first reel (and therefore between the coils). Preferably, a single service fabric coil alignment system is provided, equipped with coupling means advantageously provided on both sides of the unit, to allow the fixation of an auxiliary frame possible on both sides of the driving unit.

The alignment system is preferably controlled by a sensor that optically detects the position of the service fabric unwound from its reel. The sensor is preferably placed on a multi-purpose unit which is installed in front of the carriage when the carriage is located in the position for receiving the semifinished product. A rubber made and curved cylinder is also provided on said unit, for both the service fabrics, which is positioned by a pneumatic device.

The great advantage of the invention lies in the fact that the onboard carriage, when fully loaded (i.e. with a complete reel of semifinished product) can be extracted laterally, pushed by the driving unit thanks to the motorized guided drive of the latter. At the same time, a second empty carriage can be introduced on the opposite side of the winding station to replace the loaded carriage just extracted. Said empty carriage, for example, can be prepared with service fabric on machines for cutting the semifinished product into sheets for tyres. The driving unit conveniently moves the full carriage into the load extraction direction and inserts the empty carriage into the winding position.

The invention greatly facilitates the coil change operation. The loaded carriage can be removed on one side of the winding station, e.g. from the left, making the driving unit slide to the left and, simultaneously, the empty carriage to replace the removed one can be introduced into the station from the right. The full carriage is disengaged from the driving unit while the empty carriage is quickly connected thanks to the double lateral hooks. The handling is safe thanks to the guides. Clearly the change operation is performed after having cut the semifinished product.

Thanks to the substantially symmetrical construction each carriage can be introduced on both sides of the winding station and can be connected indifferently on one side or the other side of the driving unit.

Another advantage of the invention is that the carriages are relatively simple and cheap items given that the most expensive technological components are grouped in the driving unit and in the multi-purpose unit. Substantially, a carriage can comprise a frame with pivoting wheels and a frame on guides, equipped with related hooks, the reels with related joint terminals and possibly the diverting cylinders. Therefore, a plurality of interchangeable carriages can be prepared without excessive costs. The carriages, being interchangeable and reusable in the same winding station, can be termed shuttle carriages or compartment carriages.

The carriage is substantially a passive component designed to be operated by external motors and usable for keeping the material in storage or for handling the material between different process stages.

More in particular, the loaded carriage can be brought to storage waiting for subsequent use or transferred to another work area where the semifinished product will be unwound and at the same time the service fabric is rewound onto its own reel to be completely reused.

The empty carriage that replaces the loaded one can be prepared with the service fabric already drawn in with the main winding reel of the semifinished product. In this way the process can start again as soon as the empty carriage is in position and engaged with the driving unit.

Advantageously, the carriages can be moved with automatic guided vehicle systems known as AGV.

The invention therefore provides a system for winding the semifinished product through extractable reel-holder carriages and a driving unit with a transmission engageable with the interchangeable carriages.

The invention also relates to a reel-holder carriage that can be used in a winding group of the type described above, the carriage being free from motors and comprising two reels respectively for semifinished product and for a service fabric, each of said two reels having two joint terminals on opposite sides of the carriage.

The advantages of the invention shall become clearer with the aid of the following description, with reference to a preferred and non-limiting embodiment.

### Brief description of the figures

Fig. 1 schematically shows a front view of a winding group according to an embodiment of the invention, placed below a station for cutting the semifinished product.
Fig. 2 is a front view of a reel-holder carriage coupled to the driving unit of the group of Fig. 1.
Fig. 3 is a side view of the driving unit.
Fig. 4 is a rear view of the carriage and of the driving unit.
Fig. 5 shows a front and side view of a preferred embodiment of a reel joint.
Fig. 6 shows a sectional and front view of an embodiment of a female power drive adapted to house the joint element of Fig. 5.
Figs. 7 and 8, in a view from above, illustrate the step of replacing the carriage with a full coil of the group of Fig. 2 with a carriage with an empty reel.

### Detailed description

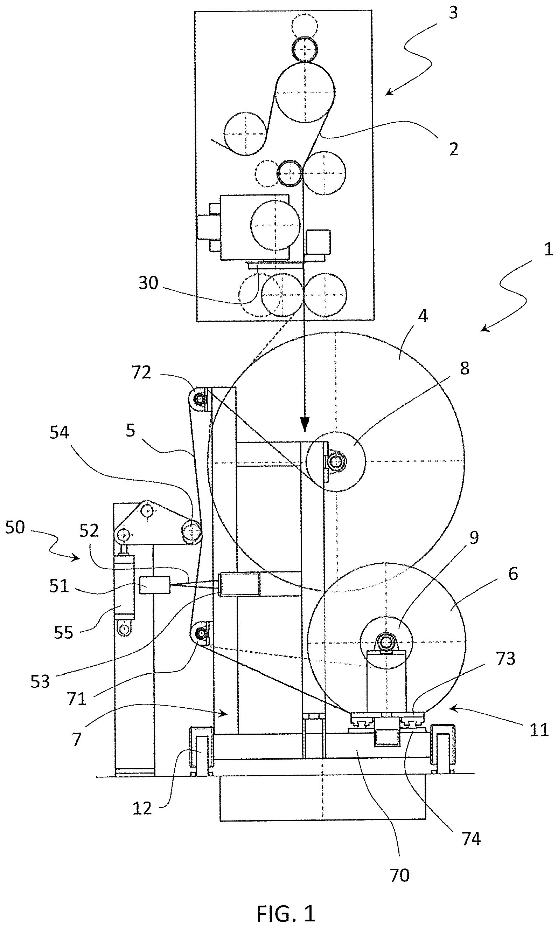

Fig. 1 shows a winding group 1 of a multilayer semifinished product 2, which is for example a rubber cord, placed downstream of a cutting unit 3 of the semifinished product.

The cutting unit 3 is able to transversally cut the cord 2 with an appropriate blade, e.g. a rotating blade 30.

In normal operation, the winding group 1 receives the cord 2 forming a coil 4. The cord is wound with the interposition of a service fabric 5 unwound from a respective coil 6.

A reel-holder carriage 7 is placed in a winding station 11, which is essentially located below the cutting unit 3.

Said carriage 7 carries a reel 8 around which the coil 4 of rubber cord is wound and a reel 9 that supports the coil 6 of service fabric. In the example, the carriage 7 also carries a pair of diverting cylinders 71, 72 for the service fabric.

The carriage 7 essentially comprises a frame 70 which, in turn, comprises the appropriate supports for the reel 8 and for the diverting cylinders 71, 72. The second reel 9 is mounted on an auxiliary frame 73 that is axially slidable on guides 74 with respect to the main frame 70, to allow the appropriate centring of the coil 6 of service fabric with respect to the coil 4 and to the semifinished product 2.

The centring is performed using an appropriate optical sensor 51 that is located on a stationary multi-purpose unit 50 located in front of the station 11.

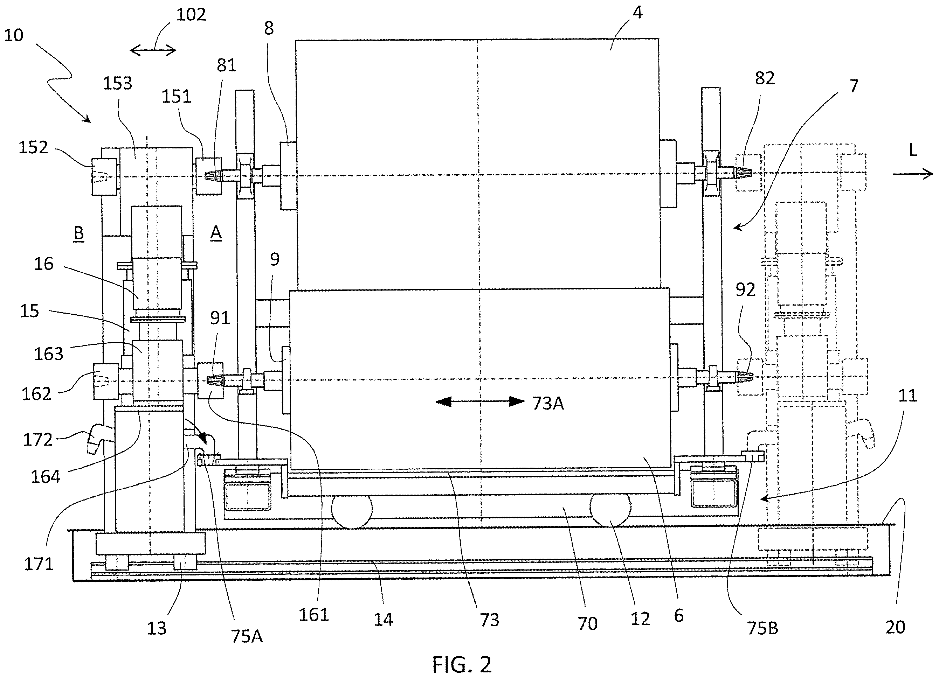

The double arrow 73A of Fig. 2 indicates the possibility of the auxiliary frame 73 to slide with respect to the main frame 70.

The service fabric is further spread out and stretched, before being wound onto the reel 4, by means of a rubber made curved stretching cylinder 54, positioned with a pneumatic control 55.

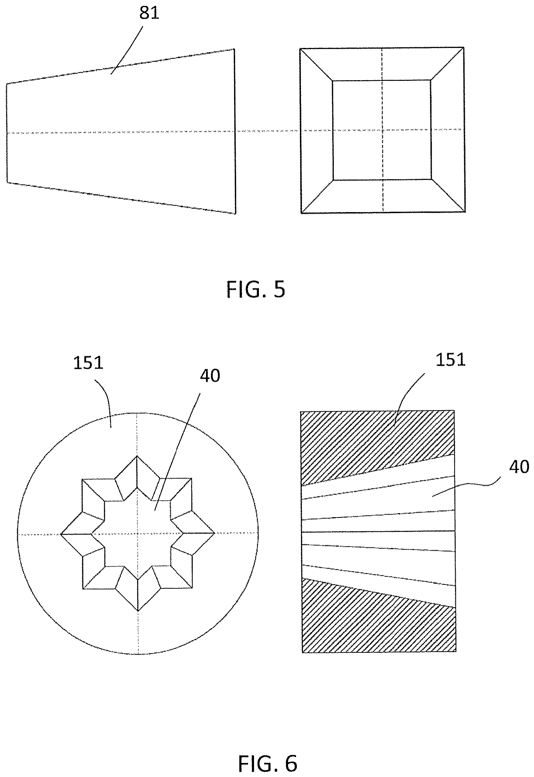

The ends of the reel 8 are provided with joints 81, 82, e.g. conical or truncated pyramid shaped joints as shown in Fig. 5. Likewise, the reel 9 is provided with end joints 91, 92.

The frame 70 is provided with pivoting wheels 12 that allow said carriage 7 to be easily inserted or extracted into/from the station 11.

The carriage 7 is further connected to a driving unit 10 (Fig. 2). Said driving unit 10 is an operating unit that drives the reels 8 and 9 and centres the reel 9 of service fabric.

Said driving unit 10 is slidable through the winding station 11 in a lateral direction L. For that purpose, the unit 10 is provided with sliders 13 configured to slide on rectilinear guides 14. The guides 14 are arranged along the lateral direction L which is transverse with respect to the so called line direction, i.e. the transport direction of the semifinished product 2. Said line direction is perpendicular to the plane of Fig. 2.

The guides 14 are placed below the floor 20 on which the wheels 12 of the carriage rest. The sliding of the driving unit 10 along the guides 14 is advantageously motor-driven.

Onboard the driving unit 10 a first motor 15 and a second motor 16 are installed, the first motor 15 being dedicated to drive the reel 8 and the second motor 16 to drive the reel 9.

The first motor 15 has a gear reducer 153 with two power drives 151, 152 on opposite sides of the unit 10 and similarly the second motor 16 has a gear reducer 163 with two power drives 161, 162 on opposite sides of the unit 10. The sides of the driving unit 10 are denoted in Fig. 2 with A and B.

The joints 81, 82 and 91, 92 can be coupled to said power drives of the motors 15 and 16.

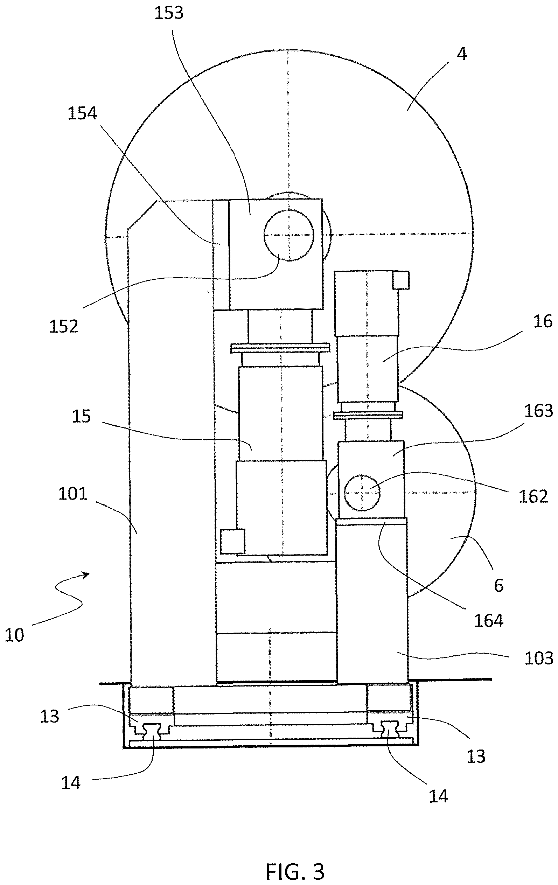

The first gear motor group formed by the motor 15 and by the gear reducer 153 is slidable, in a direction indicated by the double arrow 102 of Fig. 2, with respect to a support 101 firmly connected to the frame of the unit 10. For that purpose, for example, the gear motor group is mounted on a slider denoted by reference 154 of Fig. 3.

The second gear motor group formed by the motor 16 and by the reducer 163 is likewise mounted on a support 103 with a slider 164 and is slidable with respect to the base of the unit 10 in the same direction indicated by the double arrow 102 and independently from the first gear motor group. The movement of the gear motor groups is pneumatically operated. The sliders indicated schematically with the references 154 and 164 can be realized in the same way as the sliders 13 on which the entire unit 10 is mounted. For example, a pair of sliders is provided for each gear motor.

The pneumatic movement of the gear motor groups 15, 153 and 16, 163 allows the engagement of the power drives with the reel joints. For example in Fig. 2 the pneumatic movement to the right of the two gear motor groups allows the engagement of the power drives 151 and 161 respectively with the joint 81 of the reel 8 and with the joint 91 of the reel 9. Thanks to the described pneumatic movements of the gear motor groups and according to the relative position between the unit 10 and the carriage 7, a selected power drive of the power drives 151 and 152, or of the power drives 161 and 162, can be made operative to transmit the torque of the respective motor 15 or 16.

The lateral displacement of the gear motor groups, in Fig. 2, is illustrated by the axes. The misalignment of the gear motors towards the right is also illustrated, which allows the engagement of the side A power drives 151, 161 with the reels 8 and 9.

In Fig. 2 it can be noted that the slidable frame 73, which carries the reel 9, has joint seats 75A and 75B, on opposite sides, for a centring actuator 171 or 172 which is provided on both sides A and B of the driving unit 10.

The centring actuators 171, 172 are advantageously moved electrically and controlled by an alignment system through the signal provided by the sensor 51.

Said sensor 51 optically detects the position of the service fabric 5. In a preferred embodiment, the multifunctional unit 50 comprises an emitter of a light ray 52 that is reflected, towards the sensor 51, by a reflector 53. Said reflector 53 is fixed to an element of the frame of the carriage 7 firmly fixed to the supports of the reel 8, and is placed behind the fabric 5. By detecting the quantity of light reflected by the reflector 53, the sensor 51 is able to detect the position of the fabric 5 and, in particular, detects any displacement from the desired alignment position between the coils.

For example, the sensor 51 and the reflector 53 are positioned so that, in the aligned coil condition, the fabric shades a predefined portion (e.g. half) of the reflector 53; if the coil 6 is not properly centred, the edge of the fabric 5 uncovers a larger portion or a smaller portion of the reflector 53 and the sensor 51 detects the consequent variation of reflected light.

When the sensor 51 detects a centring error, the alignment system operates the actuator 171 or 172 to adjust the position of the sliding frame 73. The actuator pulls or pushes the slidable frame 73 of the carriage to adjust the position of the reel 9 and consequently of the coil 6, with respect to the coil 4 of semifinished product. The gear motor group 16, 163 is also moved, thanks to the slider 164, following the adjustment dictated by the alignment system, so as to maintain the correct engagement between the power drive 161 and the joint 91.

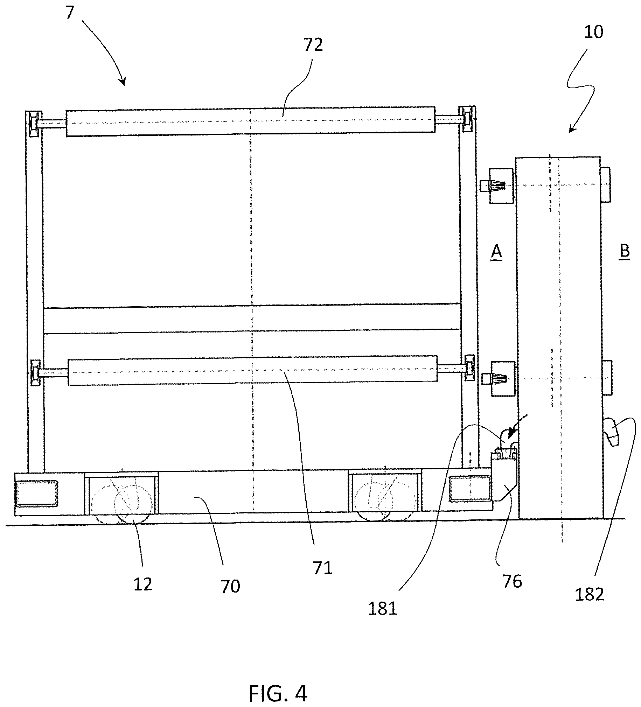

The driving unit 10 also has a respective pneumatic anchoring hook 181, 182 (visible in Fig. 4) that can be engaged in a seat 76 firmly fixed to one of the elements of the frame 70 for firmly anchoring the carriage 7 to the unit 10. The elements of the frame 70 may comprise longitudinal beams, uprights and cross members appropriately arranged.

Returning to Fig. 2, the carriage 7 is connected to the side A of the driving unit 10. The gear motor groups are positioned so as to cause the engagement of the reel 8 (through joint 81) in the power drive 151 and the engagement of the reel 9 (through joint 91) in the power drive 161. The gear motor groups 15 and 16 are therefore positioned to transmit torque to the conical joints 81 and 91 on side A. The coil of service fabric is centred with the actuator 171 of seat 75A inserted and the carriage is anchored to the hook 181.

Due to the effect of the described connections, in the arrangement of Fig. 2 the driving unit 10 is able to put the reels 8 and 9 in rotation for winding the semifinished product 2 together with the service fabric 5. The alignment system maintains the correct position of the service fabric by moving, if necessary, the auxiliary frame 73 and the group of the motor 16 - gear reducer 163.

Fig. 2 shows with a broken line a different relative position between the driving unit 10 and the carriage 7. In particular it indicates an arrangement in which the carriage 7 is on the side B of the driving unit 10. It can be understood that the unit 10 can likewise operate the reels of the carriage by using, in this case, the joints 82 and 92, the actuator 172 inserted in the seat 75B for centring and the hook 182 for anchoring.

In other words, the driving unit 10 can position the carriage 7 and make it operative, by operating the related reels, regardless of the relative position.

Again from Fig. 2 it can be noted that the driving unit 10, being provided with a motor drive on the guides 14, can usefully push the carriage 7 in the lateral direction L. The motor drive of the unit 10 with respect to the guides 14 is particularly useful for extracting the loaded carriage which is rather heavy due to the presence of the complete coil 4, as well as simultaneously introducing the empty carriage.

Some of the details described are more clearly visible in Fig. 3 or in Fig. 4. In Fig. 3, for example, the arrangement of the motors 15, 16 flanged to the respective reducers 153 and 163 can be noted.

Figs. 5 and 6 show a preferred embodiment of the jointing system referring, by way of example, to the joint 81 and to the power drive 151. The joint 81 is shaped like a truncated pyramid male element with a square base; the power drive 151 has a seat 40 with a truncated pyramid shape substantially conjugated to the shape of the element 81. The seat 40, in particular, as can be noted from Fig. 6, has an eight pointed star shape which allows the seat 40 to house the joint 81 with a square section both aligned and rotated through 45 degrees with respect to the power drive, to facilitate coupling. The coupling can be performed by putting the motor in a slow rotation, until the joint engages the power drive.

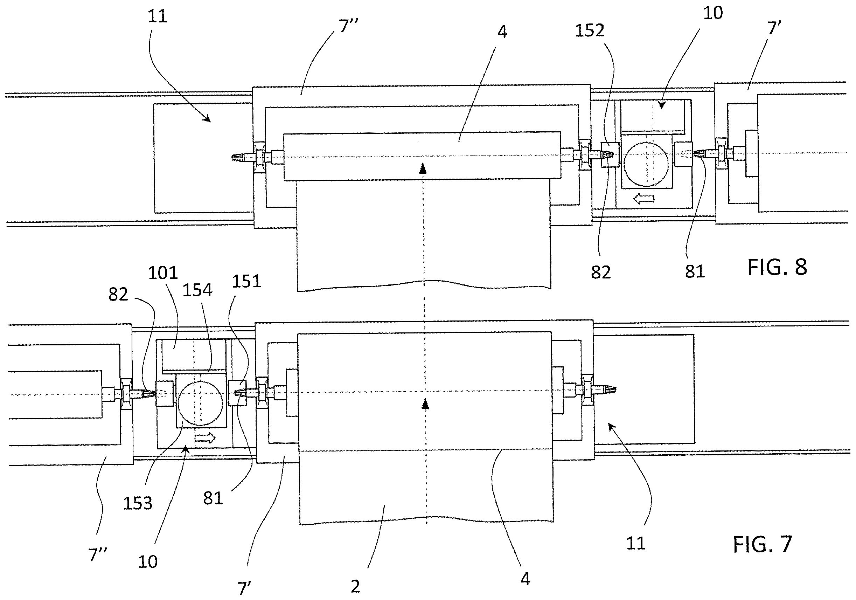

With reference to Figs. 7 and 8, it is now described the procedure for the replacement of a loaded carriage 7' with an identical empty carriage 7".

In Fig. 7, an onboard carriage 7' is connected to the side A of the driving unit 10. While the coil 4 on the carriage 7' is being filled, an empty carriage 7" is arranged on side B of the unit 10.

Once the coil 4 is complete the carriage 7' is removed from the station 11 pushed by the unit 10.

The joint 81 with the reel 8 is released from the power drive 151 and likewise the joint with the reel 9 is disengaged and the couplings are disengaged (carriage anchoring and reel 9 alignment) so as to release the carriage 7' from the unit 10.

The empty carriage 7" is in turn connected to the driving unit 10 using the power drive 152. It is to be noted that after moving the driving unit 10, the carriage 7" faces the side B of the unit 10. The power drive 152 is coupled to the joint 82 of the carriage 7" and a similar connection is made with the reel 9 of the carriage 7" using the power drive 162. For this purpose, i.e. to cause the engagement between power drives and reels, the previously described pneumatic displacement system of the gear motor groups is used.

Once the coil of the carriage 7" is complete, the operation is repeated in a substantially symmetrical way, i.e. by removing the carriage 7" from the station 11 through the unit 10 after introducing an empty carriage.

It is also to be noted that the carriage 7' is removed from the station 11 pushed by the unit 10 while the rubber-made curved stretching cylinder 54 is detached from the position between the diverting cylinders 71, 72 by means of the pneumatic control 55. After the carriage 7" has been inserted in its place, the rubber-made curved stretching cylinder 54 is repositioned between the diverting cylinders 71, 72.

The substantial simplicity of the shuttle carriage 7 is to be noted, as the carriage has no motors on board as the driving units are grouped on the driving unit 10. A carriage 7 essentially comprises the reels 8, 9, the diverting cylinders, the hook for fixing the carriage to the driving unit, the sliders for the centring system of the reel 9 and the related hook. Therefore, different interchangeable carriages 7 can be realized at a low cost to the advantage of the production efficiency.

## Claims

1. Winding group (1) for a multilayer semifinished product, particularly for a rubber cord comprising a textile or metal substrate coated on one or both faces with an elastomer, comprising:
a winding station (11);
a carriage (7) positionable in the winding station, in a position for receiving the semifinished product (2), the carriage also being insertable/extractable laterally in/from said winding station (11);
a driving unit (10) which is associable with the carriage (7) and is slidable through said winding station (11) in a lateral insertion and/or extraction direction (L) of the carriage;
wherein the carriage (7) comprises a first reel (8) with a horizontal axis for winding the semifinished product and a second reel (9) having a horizontal axis parallel to the axis of the first reel (8), said second reel being for a coil of a film or service fabric to be wound together with the semifinished product,
**characterized in that**
the driving unit (10) comprises a first motor (15) with two power drives (151, 152) located on opposite sides (A, B) of the driving unit (10) and engageable with said first reel (8) of the carriage (7);
said carriage first reel (8) comprises two joints (81, 82) which are placed on opposite sides of the carriage (7) and can both engage one (151) or the other power drive (152) of said first motor (15), said driving unit (10) thus being able to drive the winding reel (8) of the carriage (7) regardless of placing the carriage (7) on one side (A) or on the other side (B) of the driving unit (10);
the driving unit (10) comprises a second motor (16) with two power drives (161, 162) located on opposite sides (A, B) of the driving unit (10) and engageable with the second reel (9) of the carriage;
said second reel (9) comprises two joints (91, 92) on opposite sides of the carriage (7);
the joints (91, 92) of the second reel both being engageable in one or the other of said two power drives (161, 162), the driving unit (10) thus being able to drive both the first reel (8) and the second reel (9) regardless of placing the carriage (7) on one side (A) or on the other side (B) of the driving unit (10).

2. Winding group according to claim 1 comprising a plurality of carriages (7', 7") positionable in said winding station (11), each carriage having at least one reel (8) for the semifinished product or preferably two reels (8, 9) for the semifinished product and for a service fabric.

3. Winding group according to claim 2 wherein the carriages are substantially identical and interchangeable.

4. Winding group according to one of the preceding claims wherein the joints between reels (8, 9) and power drives (151, 152, 161, 162) are conical joints or truncated pyramid shaped joints and preferably are engageable and disengageable pneumatically.

5. Winding group according to one of the preceding claims, wherein at least one motor (15, 16) of the driving unit (10) comprises a gear reducer (153, 163) with two power drives positioned on opposite sides of the unit (10), thus forming a gear motor group, and the driving unit (10) comprises a displacement system, preferably pneumatic, of said gear motor group, for moving the gear motor group so as to provide engagement with the reel or the reels of the carriage (7) positioned on the side of the driving unit (10).

6. Winding group according to one of the preceding claims, wherein the driving unit (10) comprises first coupling means (181, 182) and the carriage (7) comprises second coupling means (76), said first and second coupling means being engageable for firmly anchoring the driving unit (10) to the carriage (7), wherein the first coupling means are provided on both sides (A, B) of the driving unit (10).

7. Winding group according to one of the previous claims, wherein the carriage (7) comprises a main frame (70) that carries the first reel (8) for the semifinished product and an auxiliary frame (73) that carries the second reel (9) for the service fabric, the auxiliary frame (73) being slidable relative to the main frame in a direction parallel to the axis of the second reel (9), and the driving unit comprises at least one coupling means (171, 172), preferably on both sides, which can be coupled to said auxiliary frame for centring of the coil (6) of service fabric mounted on the second reel (9) with respect to the coil (4) of semifinished product formed around the first reel (8), and the group comprises an alignment system, preferably with an optical position sensor (51) of the service fabric (5), configured to adjust the position of the auxiliary frame (73) with respect to the main frame (70), through said coupling means (171, 172) to maintain a target alignment between said two coils (4, 6).

8. Machine for producing a multilayer semifinished product comprising a winding group according to any one of the previous claims.

9. Machine according to claim 8, wherein the machine extends predominantly in a longitudinal direction of the line and the driving unit (10) is slidable on rectilinear guides (14) arranged in a perpendicular direction to said longitudinal direction of the line.

10. Reel-holder carriage (7) suitable for use in a winding group according to one of the previous claims, the carriage having no motor and comprising two reels (8, 9) respectively for a semifinished product and for a service fabric, **characterized in that** each of said two reels having two joints (81, 82, 91, 92) on opposite sides of the carriage which can be coupled to the power drives (151, 152, 161,162) of said first and second motors (15,16).

11. Reel-holder carriage according to claim 10, wherein the reel (9) for the service fabric is mounted on a slidable frame (73) for centring with respect to the reel (8) of semifinished product.

## Patentansprüche

1. Wickelgruppe (1) für ein mehrschichtiges Halbfabrikat, insbesondere für ein Gummikabel, das ein Textil- oder Metallsubstrat umfasst, das auf einer oder beiden Seiten mit einem Elastomer beschichtet ist, umfassend:
eine Wickelstation (11);
einen Wagen (7), der in der Wickelstation in einer Position zur Aufnahme des Halbfabrikats (2) positionierbar ist, wobei der Wagen auch seitlich in die Wickelstation (11) einführbar/aus dieser herausführbar ist;
eine Antriebseinheit (10), die dem Wagen (7) zuordenbar ist und durch die Wickelstation (11) in einer seitlichen Einführ- und/oder Herausführrichtung (L) des Wagens verschiebbar ist;
wobei der Wagen (7) eine erste Spule (8) mit einer horizontalen Achse zum Aufwickeln des Halbfabrikats und eine zweite Spule (9) mit einer horizontalen Achse parallel zur Achse der ersten Spule (8) aufweist, wobei die zweite Spule für eine Spule eines Films oder Einsatzgewebes vorgesehen ist, die zusammen mit dem Halbfabrikat zu wickeln ist,
**dadurch gekennzeichnet, dass**
die Antriebseinheit (10) einen ersten Motor (15) mit zwei Leistungsantrieben (151, 152) aufweist, die auf gegenüberliegenden Seiten (A, B) der Antriebseinheit (10) angeordnet sind und mit der ersten Spule (8) des Wagens (7) in Eingriff bringbar sind;
die erste Spule (8) des Wagens zwei Verbindungsstellen (81, 82) aufweist, die auf gegenüberliegenden Seiten des Wagens (7) angeordnet sind und beide mit dem einen (151) oder dem anderen Leistungsantrieb (152) des ersten Motors (15) in Eingriff gebracht werden können, wobei die Antriebseinheit (10) somit in der Lage ist, die Wickelspule (8) des Wagens (7) unabhängig davon anzutreiben, ob der Wagen (7) auf einer Seite (A) oder auf der anderen Seite (B) der Antriebseinheit (10) angeordnet ist;
die Antriebseinheit (10) einen zweiten Motor (16) mit zwei Leistungsantrieben (161, 162) aufweist, die auf gegenüberliegenden Seiten (A, B) der Antriebseinheit (10) angeordnet sind und mit der zweiten Spule (9) des Wagens in Eingriff bringbar sind;
die zweite Spule (9) zwei Verbindungsstellen (91, 92) auf gegenüberliegenden Seiten des Wagens (7) aufweist;
die Verbindungsstellen (91, 92) der zweiten Spule beide mit dem einen oder dem anderen der zwei Leistungsantriebe (161, 162) in Eingriff bringbar sind, wobei die Antriebseinheit (10) somit in der Lage ist, sowohl die erste Spule (8) als auch die zweite Spule (9) anzutreiben, unabhängig davon, ob der Wagen (7) auf einer Seite (A) oder auf der anderen Seite (B) der Antriebseinheit (10) angeordnet ist.

2. Wickelgruppe nach Anspruch 1 mit einer Vielzahl von Wagen (7', 7"), die in der Wickelstation (11) positionierbar sind, wobei jeder Wagen mindestens eine Spule (8) für das Halbfabrikat oder vorzugsweise zwei Spulen (8, 9) für das Halbfabrikat und für ein Einsatzgewebe aufweist.

3. Wickelgruppe nach Anspruch 2, wobei die Wagen im Wesentlichen identisch und austauschbar sind.

4. Wickelgruppe nach einem der vorhergehenden Ansprüche, wobei die Verbindungsstellen zwischen den Spulen (8, 9) und den Leistungsantrieben (151, 152, 161, 162) konische Verbindungsstellen oder pyramidenstumpfförmige Verbindungsstellen sind und vorzugsweise pneumatisch einkuppelbar und auskuppelbar sind.

5. Wickelgruppe nach einem der vorhergehenden Ansprüche, wobei mindestens ein Motor (15, 16) der Antriebseinheit (10) ein Untersetzungsgetriebe (153, 163) mit zwei Leistungsantrieben aufweist, die auf gegenüberliegenden Seiten der Einheit (10) angeordnet sind, wodurch eine Getriebemotorgruppe gebildet wird, und die Antriebseinheit (10) ein vorzugsweise pneumatisches Bewegungssystem der Getriebemotorgruppe aufweist, um die Getriebemotorgruppe so zu bewegen, dass ein Eingriff mit der Spule oder den Spulen des Wagens (7) geschaffen wird, der auf der Seite der Antriebseinheit (10) angeordnet ist.

6. Wickelgruppe nach einem der vorhergehenden Ansprüche, wobei die Antriebseinheit (10) erste Kupplungsmittel (181, 182) und der Wagen (7) zweite Kupplungsmittel (76) aufweist, wobei die ersten und zweiten Kupplungsmittel in Eingriff bringbar sind, um die Antriebseinheit (10) fest am Wagen (7) zu verankern, wobei die ersten Kupplungsmittel auf beiden Seiten (A, B) der Antriebseinheit (10) vorgesehen sind.

7. Wickelgruppe nach einem der vorhergehenden Ansprüche, wobei der Wagen (7) einen Hauptrahmen (70), der die erste Spule (8) für das Halbfabrikat trägt, und einen Hilfsrahmen (73), der die zweite Spule (9) für das Einsatzgewebe trägt, aufweist, wobei der Hilfsrahmen (73) relativ zum Hauptrahmen in einer Richtung parallel zur Achse der zweiten Spule (9) verschiebbar ist, und die Antriebseinheit mindestens ein Kupplungsmittel (171, 172), vorzugsweise auf beiden Seiten, aufweist, das an den Hilfsrahmen angekoppelt werden kann, um die Wicklung (6) des auf der zweiten Spule (9) montierten Einsatzgewebes in Bezug auf die Wicklung (4) des um die erste Spule (8) gebildeten Halbfabrikats zu zentrieren, und die Gruppe ein Ausrichtsystem für das Einsatzgewebe (5), vorzugsweise mit einem optischen Positionssensor (51), aufweist, das so konfiguriert ist, dass es die Position des Hilfsrahmens (73) in Bezug auf den Hauptrahmen (70) über die Kopplungsmittel (171, 172) einstellt, um eine Zielausrichtung zwischen den beiden Wicklungen (4, 6) aufrechtzuerhalten.

8. Maschine zur Herstellung eines mehrschichtigen Halbfabrikats mit einer Wickelgruppe nach einem der vorhergehenden Ansprüche.

9. Maschine nach Anspruch 8, wobei sich die Maschine vorwiegend in einer Längsrichtung der Linie erstreckt und die Antriebseinheit (10) auf geradlinigen Führungen (14) verschiebbar ist, die in einer zu der Längsrichtung der Linie senkrechten Richtung angeordnet sind.

10. Spulenhalterwagen (7), der zur Verwendung in einer Wickelgruppe nach einem der vorhergehenden Ansprüche geeignet ist, wobei der Wagen keinen Motor aufweist und zwei Spulen (8, 9) für ein Halbfabrikat bzw. für ein Einsatzgewebe aufweist, **dadurch gekennzeichnet, dass** jede der beiden Spulen zwei Verbindungsstellen (81, 82, 91, 92) auf gegenüberliegenden Seiten des Wagens aufweist, die mit den Leistungsantrieben (151, 152, 161, 162) des ersten und des zweiten Motors (15, 16) gekoppelt werden können.

11. Spulenhalterwagen nach Anspruch 10, wobei die Spule (9) für das Einsatzgewebe auf einem verschiebbaren Rahmen (73) zur Zentrierung in Bezug auf die Spule (8) des Halbfabrikats montiert ist.

## Revendications

1. Groupe d'enroulement (1) pour un produit semi-fini multicouche, en particulier pour un cordon de caoutchouc comprenant un substrat de tissu ou de métal revêtu d'un élastomère sur une ou plusieurs faces, comprenant :
une station d'enroulement (11),
un chariot (7) pouvant être placé dans la station d'enroulement, dans une position de réception du produit semi-fini (2), le chariot pouvant également être inséré/extrait latéralement dans/de la dite station d'enroulement (11),
une unité d'enroulement (10) qui peut être associée avec le chariot (7) et peut être glissée à travers ladite station d'enroulement (11) dans une direction latérale d'insertion et/ou d'extraction (L) du chariot,
où le chariot (7) comprend une première bobine (8) avec un axe horizontal pour enrouler le produit semi-fini et une deuxième bobine (9) présentant un axe parallèle à l'axe de la première bobine (8), ladite deuxième bobine étant destinée à un enroulement de film ou de tissu de service devant être enroulé ensemble avec le produit semi-fini,
**caractérisé en ce que** l'unité d'entraînement (10) comprend un premier moteur (15) avec deux commandes mécaniques (151, 152) situées des côtés opposés (A, B) de l'unité d'entraînement (10) et pouvant être engagées avec la dite première bobine (8) du chariot (7),
ladite première bobine du chariot (8) comprend deux joints (81, 82) qui sont placés sur des côtés opposés du chariot (7) et peuvent tous les deux engager l'une (151) ou l'autre commande mécanique (152) du dit premier moteur (15), ladite unité d'entraînement (10) étant ainsi capable d'entraîner la bobine d'enroulement (8) du chariot (7) que le chariot (7) soit placé d'un côté (A) ou de l'autre (B) de l'unité d'entraînement (10),
l'unité d'entraînement (10) comprend un deuxième moteur (16) avec deux commandes mécaniques (161, 162) situées sur des côtés opposés (A, B) de l'unité d'entraînement (10) et pouvant s'engager avec la deuxième bobine (9) du chariot,
ladite deuxième bobine (9) comprend deux joints (91, 92) sur des côtés opposés du chariot (7),
les joints (91, 92) de la deuxième bobine étant tous deux engageables dans l'une ou l'autre desdites deux commandes mécaniques (161, 162), l'unité d'entraînement (10) étant ainsi capable d'entraîner à la fois la première bobine (8) et la deuxième bobine (9) que le chariot (7) soit d'un côté (A) ou de l'autre côté (B) de l'unité d'entraînement (10).

2. Groupe d'enroulement selon la revendication 1, comprenant une pluralité de chariots (7', 7") pouvant être placés dans ladite station d'enroulement (11), chaque chariot présentant au moins une bobine (8) pour le produit semi-fini ou de préférence deux bobines (8, 9) pour le produit semi-fini et pour un tissu de service.

3. Groupe d'enroulement selon la revendication 2, **caractérisé en ce que** les chariots sont essentiellement identiques et interchangeables.

4. Groupe d'enroulement selon l'une des revendications précédentes **caractérisé en ce que** les joints entre les bobines (8, 9) et les commandes mécaniques (151, 152, 161, 162) sont des joints coniques ou des joints en forme de pyramide tronquée et peuvent de préférence s'engager et se désengager de manière pneumatique.

5. Groupe d'enroulement selon l'une des revendications précédentes, **caractérisé en ce qu'**au moins un moteur (15, 16) de l'unité d'entraînement (10) comprend un réducteur à engrenages (153, 163) avec deux commandes mécaniques placées sur des côtés opposés de l'unité (10), formant ainsi un groupement de moteur à engrenage et l'unité d'entraînement (10) comprend un système de déplacement, de préférence pneumatique, dudit groupe de moteur à engrenage, pour déplacer le groupe de moteur à engrenage de manière à fournir un engagement avec la bobine ou les bobines du chariot (7) placé sur le côté de l'unité d'entraînement (10).

6. Groupe d'enroulement selon l'une des revendications précédentes, **caractérisé en ce que** l'unité d'entraînement (10) comprend un premier moyen de couplage (181, 182) et le chariot (7) comprend un deuxième moyen de couplage (76), lesdits premiers et deuxièmes moyens de couplage pouvant s'engager pour ancrer fermement l'unité d'entraînement (10) au chariot (7), où le premier moyen de couplage est prévu des deux côtés (A, B) de l'unité d'entraînement (10).

7. Groupe d'enroulement selon l'une des revendications précédentes, **caractérisé en ce que** le chariot (7) comprend un premier cadre (70) qui porte la première bobine (8) pour le produit semi-fini et un cadre auxiliaire (73) qui porte la deuxième bobine (9) pour le tissu de service, le cadre auxiliaire (73) pouvant être glissé par rapport au cadre principal dans une direction parallèle à l'axe de la deuxième bobine (9), et l'unité d'entraînement comprend au moins un moyen de couplage (171, 172), de préférence des deux côtés, qui peuvent être couplés au dit cadre auxiliaire pour le centrage de la bobine (6) de tissu de service monté sur la deuxième bobine (9) par rapport à la bobine (4) de produit semi-fini formée autour de la première bobine (8), et le groupe comprend un système d'alignement, de préférence avec un détecteur optique de position (51) du tissu de service (5), configuré pour ajuster la position du cadre auxiliaire (73) par rapport au cadre principal (70), à travers le dit moyen de couplage (171, 172) pour maintenir un alignement de cible entre les deux dites bobines (4, 6).

8. Machine de production d'un produit semi-fini multicouche comprenant un groupe d'enroulement selon l'une quelconque des revendications précédentes.

9. Machine selon la revendication 8, **caractérisée en ce que** la machine s'étend de manière prédominante dans une direction longitudinale de la ligne et **en ce que** l'unité d'entraînement (10) peut être glissée sur des guides rectilignes (14) placés dans une direction perpendiculaire à ladite direction longitudinale de la ligne.

10. Chariot de maintien de la bobine (7) adapté à être utilisé dans un groupe d'enroulement selon l'une des revendications précédentes, le chariot n'ayant pas de moteur et comprenant deux bobines (8, 9) respectivement pour un produit semi-fini et pour un tissu de service, **caractérisé en ce que** chacune des deux dites bobines présentant deux joints (81, 82, 91, 92) sur des côtés opposés du chariot qui peuvent être couplés aux commandes mécaniques (151, 152, 161, 162) desdits premiers et deuxièmes moteurs (15, 16).

11. Chariot de maintien de bobine selon la revendication 10, **caractérisé en ce que** la bobine (9) pour le tissu de service est montée sur un cadre pouvant glisser (73) afin d'être centré par rapport à la bobine (8) de produit semi-fini.
